(19) Europäisches Patentamt
European Patent Office
Office européen des brevets

(11) Veröffentlichungsnummer: **0 050 285**
**B1**

(12) # EUROPÄISCHE PATENTSCHRIFT

(45) Veröffentlichungstag der Patentschrift: **18.07.84**

(51) Int. Cl.³: **C 08 G 18/30**, C 08 G 18/14, C 08 J 9/08

(21) Anmeldenummer: **81108188.4**

(22) Anmeldetag: **12.10.81**

(54) **Einbaufähige Reaktivtreibmittel enthaltende Polyolgemische und ihre Verwendung zur Herstellung geschäumter Polyurethane.**

(30) Priorität: **22.10.80 DE 3039883**

(43) Veröffentlichungstag der Anmeldung: **28.04.82 Patentblatt 82/17**

(45) Bekanntmachung des Hinweises auf die Patenterteilung: **18.07.84 Patentblatt 84/29**

(84) Benannte Vertragsstaaten: **BE DE FR GB IT**

(56) Entgegenhaltungen:
**DE - A - 2 524 834**
**DE - C - 1 112 285**

**J.H. SAUNDERS et al. "High Polymers" Band 16 "Polyurethanes Chemistry and Technology", Teil 1: Chemistry 1962, JOHN WILEY AND SONS, New York, London**
**Chemical Abstracts, Band 93, Nr. 10 September 1980, Columbus, Ohio, USA K. ASHIDA "Unconventional blowing agents for polyurethane foams" Abstract Nr. 96089e, Seite 32, Spalte 2**

(73) Patentinhaber: **BAYER AG, Konzernverwaltung RP Patentabteilung, D-5090 Leverkusen 1 Bayerwerk (DE)**

(72) Erfinder: **Kopp, Richard, Dr., Wolfskaul 12, D-5000 Köln 80 (DE)**
Erfinder: **Meyborg, Holger, Dr., Bergisch-Gladbacher-Strasse 1, D-5068 Odenthal (DE)**
Erfinder: **Schwindt, Jürgen, Dr., Heinrich-von-Kleist-Platz 4, D-5090 Leverkusen (DE)**

**EP 0 050 285 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Mischungen von bei Raumtemperatur flüssigen Polyolen mit funktionellen Aldoximen als Treibmitteln, wobei die Aldoximgruppen mit Polyisocyanaten unter Abspaltung von Kohlendioxid reagieren und gleichzeitig über ihre funktionelle Gruppe selbst in das entstehende Polyurethan mit eingebaut werden. Deshalb werden die Aldoxime auch als einbaufähige Reaktivtreibmittel bezeichnet. Die Erfindung betrifft weiterhin ein Verfahren zur Herstellung von Polyurethanschaumstoffen unter Verwendung dieser einbaufähigen Reaktivtreibmittel als ausschließliche Treibmittelkomponente oder auch in Kombination mit an sich in der Polyurethanchemie bekannten Treibmitteln.

Das nachstehend erläuterte erfindungsgemäße Verfahren eignet sich für die Herstellung von beliebigen Polyurethan-Schaumstoffen oder zelligen Polyurethanelastomeren, findet jedoch bevorzugt Anwendung bei der Herstellung von halbharten und harten Polyurethan-Schaumstoffen mit verdickter Außenhaut, die auch als Integralschaumstoffe bezeichnet und durch Aufschäumen des Reaktionsgemisches in geschlossenen Formen erhalten werden.

Die Herstellung derartiger Polyurethan-Integralschaumstoffe ist grundsätzlich bekannt und z. B. in der DE-AS 1 196 864 beschrieben. Sie erfolgt z. B. durch Einfüllen einer reaktionsfähigen und schäumfähigen Mischung auf Basis von Verbindungen mit mehreren, gegenüber NCO-Gruppen reaktionsfähigen Wasserstoffatomen und Polyisocyanaten in einer geschlossenen Form. Als Treibmittel werden hierbei nach dem Stand der Technik Wasser und/oder Fluorkohlenwasserstoffe verwendet. Auch Katalysatoren, wie sie für die Polyurethan-Schaumstoff-Herstellung an sich bekannt sind, werden im allgemeinen mitverwendet.

Durch geeignete Wahl der Ausgangskomponente, insbesondere durch Wahl des Molgewichtes und der Funktionalität ist es möglich, sowohl elastische als auch starre bzw. alle zwischen diesen Gruppen liegenden Varianten von Schaumstoffen herzustellen. Die dichte Außenhaut wird bei diesem Verfahren dadurch erreicht, daß in die Form eine größere Menge an schäumfähigem Gemisch eingetragen wird, als zum Ausfüllen des Forminnenvolumens durch freie Verschäumung erforderlich wäre. Die Forminnenwand bewirkt dabei im allgemeinen eine Abkühlung des Reaktionsgemisches und eine Kondensation des vorzugsweise organischen Treibmittels, so daß die Treibreaktion an der Forminnenwand zum Stillstand kommt und die kompakte Außenhaut entsteht.

Als organische Treibmittel kommen für dieses Verfahren technisch ausschließlich fluorierte und/oder halogenierte Kohlenwasserstoffe in Frage, da sie einerseits einen ausreichend niedrigen Siedepunkt besitzen und andererseits im Gemisch mit Luft keine explosiven Gasgemische bilden. Aus letzterem Grund ist z. B. die Verwendung von Pentan als Treibmittel unzweckmäßig, weil aufwendige Sicherheitsvorkehrungen wegen der niedrigen Explosionsgrenze von Pentan-Luft-Gemischen erforderlich werden. Bewährte Treibmittel für Polyurethan-Integralschäume sind besonders Fluortrichlormethan und/oder Methylenchlorid.

Gegenüber beiden Treibmitteln werden aus ökologischer Sicht in neuerer Zeit Bedenken geäußert.

Deshalb ist es wünschenswert, Treibmittelalternativen für die Herstellung von Polyurethanschaumstoffen, besonders für Polyurethan-Integralschaumstoffe zu entwickeln.

Wie bereits erwähnt, bietet sich Wasser als Treibmittelgenerator im Polyurethansystem an. Mittels dieser Variante lassen sich zwar Polyurethan-Freischäume von ausgezeichneter Qualität herstellen, nicht hingegen Integralschaumstoffe, da sich sowohl die Oberflächenbeschaffenheit als auch der Integralaufbau des Schaumstoffs gegenüber mit Fluorkohlenwasserstoffen geschäumten Integral-Formteilen verschlechtern, wie dem einschlägigen Fachmann bekannt ist. Nachteilig ist außerdem, daß das Wasser als Einzelkomponente dem Reaktivgemisch erst unmittelbar vor der Verschäumung zudosiert werden muß, da bei Zusatz entsprechender Wassermengen zur Polyolkomponente, die im allgemeinen bereits den Verschäumungskatalysator enthält, eine zumindest partielle Verseifung der als Katalysator unentbehrlichen Zinnverbindungen, z. B. des Dibutyl-(IV)-dilaurats, eintritt, was sich in einem unkontrollierten Aktivitätsabfall der fertig aktivierten Polyolkomponente äußert. Weitere Treibmittelvarianten stellen Verbindungen dar, die bei Temperaturen oberhalb Raumtemperatur zerfallen und dabei ein Treibgas abspalten. Beispiele sind Azodicarbonamid, Azo-bis-isobutyronitril oder Diphenylenoxiddisulfohydrazid als Stickstoffabspalter und die in der DE-OS 2 524 834 (US-PS 4 070 310) beschriebenen Pyrokohlensäureester und die in der DE-AS 2 218 328 beanspruchten Benzooxazine, die $CO_2$ abspalten. Um sie für den beabsichtigten Zweck einsetzen zu können, müssen diese Verbindungen eine relativ niedrige Zerfalltemperatur haben, die nach den allgemeinen Erfahrungen deutlich unter 100°C liegen sollte. Denn die Treibmittel müssen schon zu Beginn der Urethanisierungsreaktion wirksam sein. Zu diesem Zeitpunkt tritt aber noch keine allzu starke Wärmeentwicklung im Reaktionsgemisch auf. Verbindungen mit einer so niedrigen Zerfallstemperatur sind aber naturgemäß empfindlich während der Lagerung und sie erfordern eine sorgsame Behandlung, die in vielen Fällen im technischen Prozeß bei den Verarbeitern von Polyurethan-Schaumstoffen nicht gewährleistet werden kann. Außerdem ist häufig für diese Verbindungen kennzeichnend, daß es zu einem unkontrollierten Zerfall während der Lagerung kommt, so daß sie auch ein nicht zu unterschätzendes Sicherheitsrisiko darstellen.

In der DE-PS 1 112 285 (GB-PS 908 337) wird die Verwendung von Alkanaldoximen als Treibmittel

erwähnt. Die Aldoxime reagieren mit NCO-Gruppen unter Abspaltung von $CO_2$. Gleichzeitig bildet sich aber das entsprechende Alkylnitril, im Falle der dort erwähnten Vertreter: Acetaldoxim, Butyraldoxim oder Isobutyraldoxim entsprechend das Aceto-, Butyro- bzw. Isobutyro-nitril, die alle physiologisch bedenklich sind und niedrige Flammpunkte aufweisen.

Wie nun gefunden wurde, gelingt es die geschilderten Nachteile des Standes der Technik dadurch zu beheben, daß den an sich bekannten schäumfähigen Mischungen des Standes der Technik funktionelle Aldoxime zugesetzt werden, d. h. Aldoxime, die eine weitere, gegenüber NCO-Gruppen reaktionsfähige Gruppe wie z. B. —OH, —NHR-, Ar—$NH_2$, —SH, —COOH oder auch Epoxi- oder Carbonsäureanhydridgruppen besitzen. Bevorzugt sind an (cyclo)aliphatische Reste gebundene Hydroxylgruppen, Carboxylgruppen und aromatisch gebundene Aminogruppen als funktionelle Reaktivgruppen. Ganz besonders geeignet sind an (cyclo)aliphatische Reste gebundene sekundäre Hydroxylgruppen. Diese einbaufähigen Aldoxim-Reaktivtreibmittel sind in der Polyolmischung praktisch unbegrenzt lagerfähig. Sie führen in der Regel nicht zur Hydrolyse von Zinnkatalysatoren und damit auch zu keinem Aktivitätsverlust der fertig aktivierten Polyolmischung, besonders sind hier die Hydroxylgruppen enthaltenden Aldoximtreibmittel geeignet, da sie gegenüber den Zinnkatalysatoren völlig stabil sind. Die Abspaltung von $CO_2$, das die Schaumstoff-Treibreaktion bewirkt, erfolgt erst bei Zumischung von Polyisocyanaten innerhalb der Reaktionsmischung. Die Mischungen lassen sich umweltfreundlich und ungefährlich verarbeiten, da die aus dem Reaktivtreibmittel bei der Reaktion entstehenden Produkte in das Polyurethan eingebaut werden, ohne daß Verschlechterungen der Polyurethaneigenschaften beobachtet werden.

Gegenstand der Erfindung sind Aldoxime als Treibmittel aufweisende Mischungen, enthaltend

A) unterhalb von 45° C flüssige Polyole oder Polyolgemische mit einem mittleren Molekulargewicht von 400 bis 10 000;
und darin gelöst
B) 0,1 bis 20 Gew.-%, vorzugsweise 0,2 bis 8 Gew.-% eines einbaufähigen Aldoxim-Reaktivtreibmittels der Formel

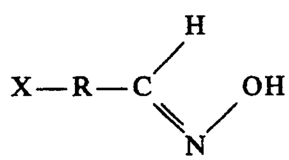

(I)

wobei

X —OH, —COOH, —$NH_2$ (Amin nur an aromatische Reste gebunden), —NHR', worin R' eine Alkylgruppe mit 1 bis 8 C-Atomen bedeutet (nur an aromatische Reste gebunden); vorzugsweise die OH-Gruppe, besonders als sekundäre OH-Gruppe, und

R einen aliphatischen, gegebenenfalls verzweigten Rest mit 1 bis 9 C-Atomen, vorzugsweise 1 bis 4 $C_4$-Atomen, einen cycloaliphatischen Rest, gegebenenfalls ein —O-Atom im Ring enthaltend, einen aromatischen Rest oder einen araliphatischen Rest, bei dem der aliphatische Rest durch ein Sauerstoffatom an den aromatischen Kern gebunden ist, bedeutet.

Gegenstand der Erfindung ist auch die Verwendung von Mischungen aus

A) unterhalb von 45° C flüssigen Polyolen oder Polyolgemischen mit einem mittleren Molekulargewicht von 400 bis 10 000;
und darin gelöst
B) 0,1 bis 20 Gew.-%, vorzugsweise 0,2 bis 8 Gew.-% eines einbaufähigen Aldoxim-Reaktiv-Treibmittels der Formel

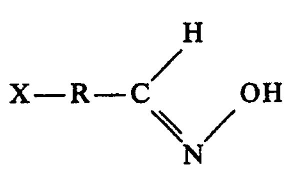

(I)

zur Umsetzung mit Polyisocyanaten, gegebenenfalls in Gegenwart weiterer Verbindungen vom Molekulargewicht 62 bis 10 000, vorzugsweise 62 bis 400, mit gegenüber NCO-Gruppen reaktiven H-Atomen,

unter Bildung von Polyurethanschaumstoffen.

Beispiele für diese funktionellen Aldoxim-Treibmittel der Formel:

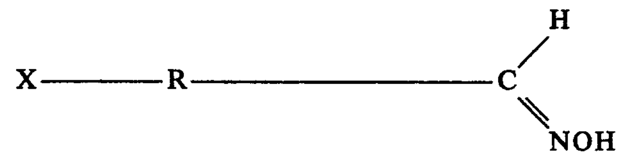

sind:

2-Hydroxy-ethan-aldoxim-(1)

2-Hydroxy-propan-aldoxim-(1)

3-Hydroxy-butan-aldoxim-(1)

3-Hydroxy-2-methyl-butan-aldoxim-(1)

3-Hydroxy-2,2-dimethyl-propan-aldoxim-(1)

2-Hydroxy-2-methyl-propan-aldoxim-(1)

3-Hydroxy-2-methyl-pentan-aldoxim-(1)

3-Hydroxy-2,2-dimethyl-butan-aldoxim-(1)

3-Hydroxy-2,4-dimethyl-pentan-aldoxim-(1)

3-Hydroxy-2-isopropyl-5-methyl-hexan-aldoxim-(1)

4-Hydroxy-hexahydro-benz-aldoxim-(1)

5-Hydroxymethyl-furfur-aldoxim-(1)

p-Hydroxymethyl-benzald oxim

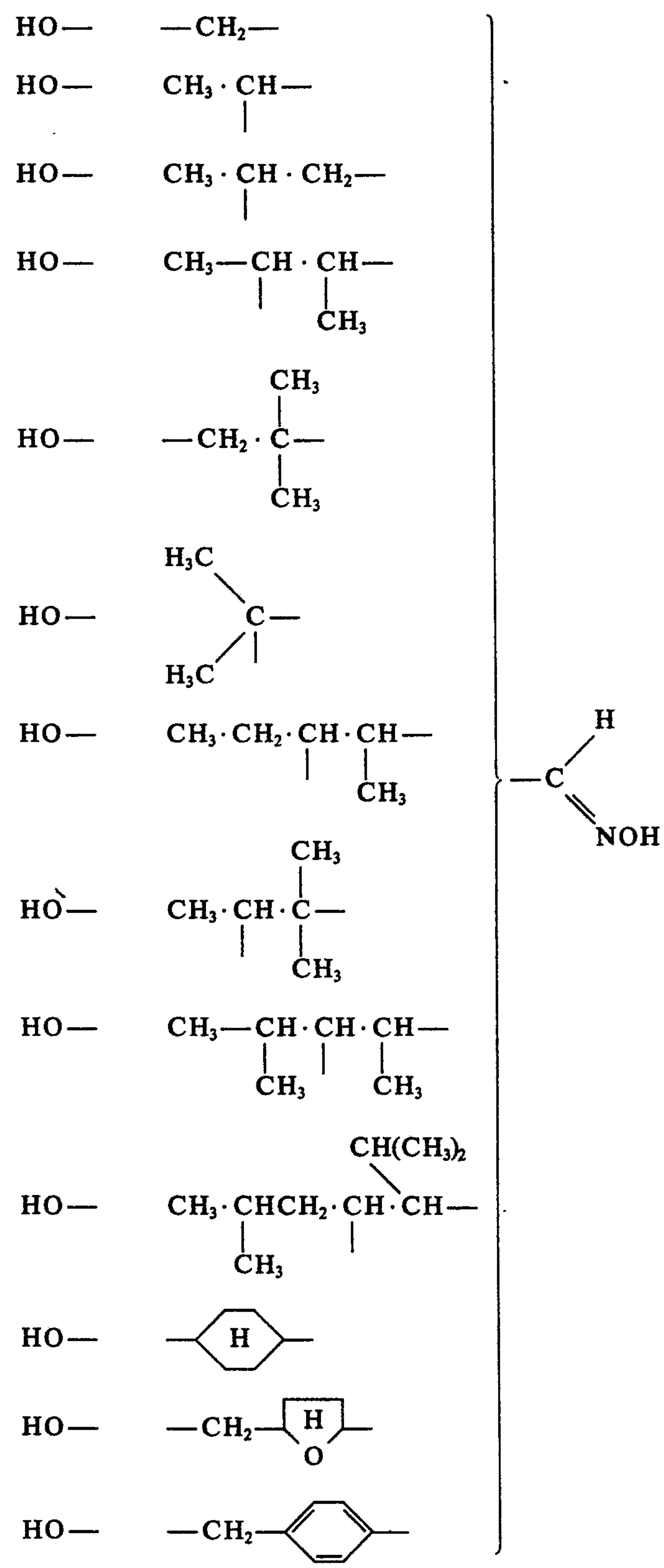

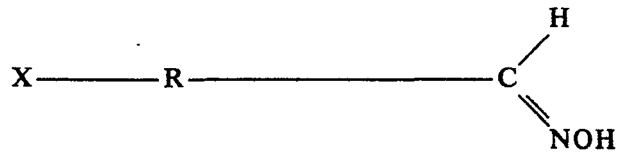

propoxyliertes p-Hydroxy-phenyl-benzaldoxim

p-Amino-benzaldoxim

4-Amino-/3-methyl-benzaldehyd/-oxim

β-Oximino-propionsäure

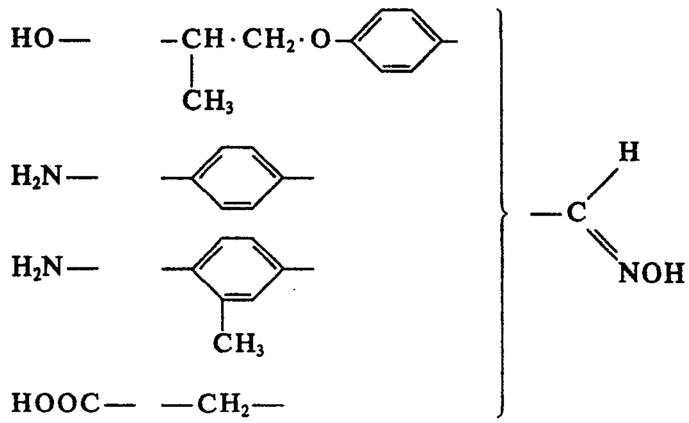

Als Treibmittel besonders geeignet und für das erfindungsgemäße Verfahren zur Herstellung von Polyurethanschaumstoffen bevorzugt sind Aldoxime mit sekundären Hydroxygruppen. Besonders bevorzugte Verbindung ist das 3-Hydroxy-butanaldoxim-(1), das auch technisch leicht zugänglich ist. Die mit diesen sekundären Hydroxygruppen enthaltenden Aldoximen hergestellten Polyurethanfreischäume besitzen niedrigere Raumgewichte als mit Aldoximen mit primären Hydroxylgruppen oder mit Aminogruppen hergestellte Schäume. Weiterhin treten bei der Verwendung von Aldoximen mit sekundären Hydroxylgruppen keine Störungen im Freischaum auf, bei Verwendung mit Aldoximen mit primären Hydroxyl- oder Aminogruppen hingegen werden bisweilen Risse und Oberflächenstörungen im fertigen Schaumstoff beobachtet. Die Verbindungen sind jedoch zur Herstellung von Integralschaumstoffen gleichartig mit Vorteil verwendbar.

Zur Herstellung der aldoximtreibmittelhaltigen Mischungen aus Polyolen und einbaufähigen Aldoximreaktivtreibmitteln (I) sind alle üblicherweise zum Einsatz kommenden Polyole oder auch Polyolmischungen geeignet, die einen niedrigen Schmelzpunkt von kleiner 45° C aufweisen, vorzugsweise aber flüssig sind.

Die Herstellung der treibmittelhaltigen Mischungen ist an sich unproblematisch und gelingt durch einfaches Verrühren der einbaufähigen Aldoximreaktivtreibmittel in den Polyolen, wobei eine Erwärmung auf bis etwa 60° C die Auflösung beschleunigen kann. Man kann jedoch auch eine Auflösung der Treibmittel in einer Teilmenge oder in einer der Polyolkomponenten, z. B. in niedermolekularen Diolen in Butandiol-(1,4) vornehmen und dann mit der Polyolhauptmenge vermischen. Weitere Hilfsmittel wie Katalysatoren, Verlaufmittel und Pigmentpasten können gegebenenfalls mit eingemischt werden.

Als Polyol-Ausgangskomponenten für die zellförmigen Polyurethane bzw. die Polyurethanschaumstoffe einschließlich Integralschaumstoffe werden in üblicher Weise Verbindungen mit mindestens zwei gegenüber Isocyanaten reaktionsfähigen Wasserstoffatomen und einem Molekulargewicht in der Regel von 62 bis 10 000 in den Einzelkomponenten verwendet. In der überwiegenden Menge ersetzt man dabei vorzugsweise Hydroxylgruppen aufweisende Verbindungen insbesondere 2 bis 8 Hydroxylgruppen aufweisende höhermolekulare Verbindungen, speziell solche vom Molekulargewicht 400 bis 8000, vorzugsweise 600 bis 4000, ein. Dies sind z. B. 2, in der Regel 2 bis 8, vorzugsweise aber 2 bis 4, Hydroxylgruppen aufweisende Polyester, Polyether, Polythioether, Polyacetale, Polycarbonate und Polyesteramide oder deren Mischungen, wie sie für die Herstellung von homogenen und zellförmigen Polyurethanen an sich bekannt sind. Sie können mit weiteren, niedermolekularen, polyfunktionellen Verbindungen wie vorzugsweise Polyolen, aber gegebenenfalls auch Polyaminen oder Polyhydraziden mit Molekulargewichten von etwa 62 bis 400 gemischt werden, um die Eigenschaften der Polyurethane zu modifizieren. Der überwiegende Anteil in der Polyol-Mischung (z. B. mehr als 60 Gew.-%, vorzugsweise mehr als 80 Gew.-%) sind jedoch die höhermolekularen Polyole mit Molekulargewichten von 400 bis 10 000, vorzugsweise von 600 bis 4000. Das mittlere Molekulargewicht der Polyol-Mischungen aus höhermolekularen und gegebenenfalls niedermolekularen Polyolen soll dabei zwischen 400 und 10 000,vorzugsweise zwischen 600 und 4000, liegen, wenn zellförmige Polyurethanelastomere und bevorzugt Polyurethanschaumstoffe, einschließlich formgeschäumter Integralschaumstoffe, hergestellt werden sollen.

Die bevorzugt zur Anwendung kommenden, mindestens 2, in der Regel 2 bis 8, vorzugsweise 2 bis 3, Hydroxylgruppen aufweisenden Polyether sind solche der an sich bekannten Art und werden z. B. durch Polymerisation von Tetrahydrofuran oder Epoxiden wie Ethylenoxid, Propylenoxid, Butylenoxid,

Styroloxid oder Epichlorhydrin mit sich selbst, z. B. in Gegenwart von Friedel-Crafts-Katalysatoren wie Bortrifluorid, oder durch Anlagerung dieser Alkoxide, vorzugsweise von Ethylenoxid und Propylenoxid, gegebenenfalls im Gemisch, z. B. im Verhältnis von 5 : 95 bis 95 : 5, oder nacheinander, an Startkomponenten mit reaktionsfähigen Wasserstoffatomen wie Wasser, Alkohole, Ammoniak oder Amine, z. B. Ethlenglykol, Propylenglykol, Ethylenglykol, Propylenglykol-1,3 oder -1,2, Trimethylolpropan, Glycerin, Sorbit, 4,4'-Dihydroxydiphenylpropan, Anilin, Ethanolamin oder Ethylendiamin hergestellt. Auch Succhrose Polyether sowie auch Formit- oder Formose-gestartete Polyether kommen in Frage. Vielfach sind solche Polyether bevorzugt, die überwiegend (bis zu 90 Gew.-% bezogen auf alle vorhandenen OH-Gruppen im Polyether) primäre OH-Gruppen aufweisen. Auch OH-Gruppen aufweisende Polybutadiene sind geeignet.

Als in Frage kommende Hydroxylgruppen aufweisende Polyester sind z. B. Umsetzungsprodukte von mehrwertigen, vorzugsweise zweiwertigen, und gegebenenfalls zusätzlich dreiwertigen Alkoholen mit mehrwertigen, vorzugsweise zweiwertigen, Carbonsäuren zu verwenden. Die Polycarbonsäuren können aliphatischer, cycloaliphatischer, aromatischer und/oder heterocyclischer Natur sein und gegebenenfalls, z. B. durch Halogenatome, substituiert und/oder ungesättigt sein. Als Beispiele für solche Carbonsäuren und deren Derivate seien genannt: Adipinsäure, Sebacinsäure, Isophthalsäure, Trimellitsäure, Phthalsäureanhydrid, Hexahydrophthalsäureanhydrid, Tetrachlorphthalsäureanhydrid, Endomethylentetrahydrophthalsäureanhydrid, Fumarsäure, di- oder trimerisierte ungesättigte Fettsäuren, gegebenenfalls in Mischung mit monomeren ungesättigten Fettsäuren, Terephthalsäuredimethylester und Terephthalsäure-bis-glykolester. Als mehrwertige Alkohole kommen z. B. Ethylenglykol, Propylenglykol, Trimethylenglykol, Tetramethylenglykol, Butylenglykol-2,3, Hexamethylendiol, Octamethylendiol, Neopentylglykol, 1,4-Bis-hydroxymethyl-cyclohexan, 2-Methyl-1,3-propandiol, Glycerin, Trimethylolpropan, Hexantriol-(1,2,6), Trimethylolethan, Pentaerythrit, Sorbit, Formit, Methylglycosid, ferner Diethylenglykol, Triethylenglykol, Tetraethylenglykol und höhere Polyethylenglykole, Dipropylenglykol, höhere Propylenglykole sowie Dibutylenglykol und höhere Polybutylenglykole in Frage. Die Polyester können anteilig endständige Carboxylgruppen aufweisen. Auch Polyester aus Lactonen, z. B. $\varepsilon$-Caprolacton, oder aus Hydroxycarbonsäure, z. B. $\omega$-Hydroxycapronsäure, sind einsetzbar. Zur Erzielung flüssiger Polyesterpolyole werden vorzugsweise Mischungen aus mindestens 2 Polyolen oder mindestens 2 Carbonsäuren verwendet.

Als Polyacetale kommen z. B. die aus Glykolen wie Di-, Tri- oder Tetraethylenglykol, 4,4'-Dioxethoxydiphenyldimethylmethan, Hexandiol und Formaldehyd oder Trioxan herstellbaren Verbindungen in Frage.

Als Hydroxylgruppen aufweisende Polycarbonate kommen solche der an sich bekannten Art in Betracht, wie z. B. durch Umsetzung von Diolen wie Propandiol-1,3, Butandiol-1,4 oder Hexandiol-1,6, Di-, Tri- oder Tetraethylenglykol mit Diarylcarbonaten oder Phosgen hergestellt werden können. Die genannten Polyhydroxylverbindungen können vor ihrer Verwendung im Polyisocyanat-Polyadditionsverfahren noch in der verschiedensten Weise modifiziert werden, z. B. durch weitere Veresterung oder Veretherung bereits vorgebildeter Segmente, durch Umsetzung mit einer weniger als äquivalenten Menge eines Diisocyanatocarbodiimids und anschließende Reaktion der Carbodiimidgruppe mit einem Amin, Amid, Phosphit oder Carbonsäure. Es können gegebenenfalls auch Polyhydroxylverbindungen eingesetzt werden, in welchen hochmolekulare Polyaddukte und Polykondensate bzw. Polymerisate in feindisperser oder gelöster Form enthalten sind. Derartige Polyhydroxylverbindungen werden z. B. erhalten, wenn man Polyadditionsreaktionen (z. B. Umsetzungen zwischen Polyisocyanaten und aminofunktionellen Verbindungen) bzw. Polykondensationsreaktionen (z. B. zwischen Formaldehyd und Phenolen und/oder Aminen) in situ in den o. g. Hydroxylgruppen aufweisenden Verbindungen ablaufen läßt. Auch durch Vinylpolymerisate modifizierte Polyhydroxylverbindungen, wie sie z. B. durch Polymerisation von Styrol und Acrylnitril in Gegenwart von Polyethern oder Polycarbonatpolyolen erhalten werden, sind für das erfindungsgemäße Verfahren geeignet. Bei der Verwendung von modifizierten Polyhydroxylverbindungen der o. g. Art als Ausgangskomponenten im Polyisocyanat-Polyadditionsverfahren entstehen in vielen Fällen Polyurethanschaumstoffe mit wesentlich verbesserten mechanischen Eigenschaften. Selbstverständlich können Mischungen der o. g. Hydroxylverbindungen mit mindestens zwei gegenüber Isocyanaten reaktionsfähigen Wasserstoffatomen mit einem mittleren Molekulargewicht von 400 bis 10 000, z. B. Mischungen von Polyethern und Polyestern, gegebenenfalls in zusätzlicher Einmischung von niedermolekularen Polyolen, eingesetzt werden. Eine noch ausführlichere Aufzählung geeigneter Polyhydroxylverbindungen wird in der DE-OS 2 854 384 auf den Seiten 11 bis 21 gegeben.

Als Polyisocyanate können aliphatische, cycloaliphatische, araliphatische, aromatische und heterocyclische Polyisocyanate verwendet werden, wie sie üblicherweise zur Herstellung von Polyurethankunststoffen zum Einsatz kommen.

Beispiele sind 1,6-Hexamethylendiisocyanat, 1,12-Dodecandiisocyanat, Capronsäuremethylester-2,6-diisocyanat, beliebige Gemische der Stellungs- bzw. Stereoisomeren von 1-Isocyanato-3,3,5-trimethyl-5-isocyanatomethylcyclo-hexan, 2,4- und 2,6-Hexahydrotoluylendiisocyanat, Hexahydro-1,3- und/oder -1,4-phenylen-diisocyanat, Perhydro-2,4'- und/oder 4,4'-diphenylmethan-diisocyanat, ferner 1,3- und 1,4-Phenylendiisocyanat, 2,4- und/oder 2,6-Toluylendiisocyanat, Diphenylmethan-2,4'- und/oder -4,4'-diisocyanat und seine Alkylderivate, sowie Naphthylen-1,5-diisocyanat. Ferner kommen in

Frage: Polyphenyl-polymethylen-polyisocyanate, wie sie durch Anilin-Formaldehyd-Kondensation und anschließende Phosgenierung erhalten und z. B. in den GB-PS 874 430 und 848 671 beschrieben werden, Carbodiimidgruppen aufweisende Polyisocyanate, Allophanatgruppen oder Isocyanuratgruppen oder Urethangruppen oder Biuretgruppen aufweisende Polyisocyanate, sowie durch Telomerisationsreaktionen hergestellte Polyisocyanate. Weitere geeignete Polyisocyanate werden in der deutschen Offenlegungsschrift 2 854 384 auf den Seiten 8 bis 11 ausführlich aufgeführt. Ferner ist es möglich, beliebige Mischungen der vorgenannten Polyisocyanate zu verwenden.

Besonders bevorzugt werden in der Regel die technisch leicht zugänglichen Polyisocyanate, z. B. das 2,4- und/oder 2,6-Toluylendiisocyanat (TDI), Polyphenyl-polymethylen-polyisocyanate, wie sie durch Anilinformaldehydkondensation und Phosgenierung hergestellt werden (rohes MDI) und Carbodiimidgruppen, Urethangruppen, Allophanatgruppen, Isocyanuratgruppen, Harnstoffgruppen oder Biuretgruppen aufweisende Polyisocyanate (modifizierte Polyisocyanate), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

Gegebenenfalls können als Reaktivkomponenten für die Polyolmischungen auch weitere Verbindungen mit mindestens zwei gegenüber Isocyanaten reaktionsfähigen Wasserstoffatomen und einem Molekulargewicht von 62 bis 400 verwendet werden. Auch in diesem Fall versteht man hierunter besonders Hydroxylgruppen, aber auch Aminogruppen und/oder Thiogruppen und/oder Carboxylgruppen und/oder Hydrazidendgruppen aufweisende Verbindungen, die als Kettenverlängerungsmittel oder Vernetzungsmittel bezeichnet werden. Diese Verbindungen weisen in der Regel 2 bis 8, vorzugsweise 2 bis 4, gegenüber Isocyanaten reaktionsfähige Wasserstoffatome, insbesondere Hydroxylgruppen, auf. Auch in diesem Fall können Mischungen verschiedener solcher Verbindungen mit einem Molekulargewicht von 62 bis 400 verwendet werden.

Als Beispiele für derartige Verbindungen seien genannt: Ethylenglykol, Propylenglykol, Trimethylenglykol, Tetramethylenglykol, Butylenglykol-2,3, Pentamethylenglykol, Hexamethylenglykol, Neopentylglykol, 1,4-Bis-hydroxy-methyl-cyclohexan, 2-Methyl-1,3-propandiol, Dibrombutendiol, Trimethylolpropan, Pentaerythrit, Chinit, Sorbit, Rizinusöl Diethylenglykol, höhermolekulare Polyethylenglykole mit einem Molekulargewicht bis 400, Dipropylenglykol oder höhere Polypropylenglykole mit einem Molekulargewicht bis 400, Dibutylenglykol, sowie seine höheren Oligomere mit einem Molekulargewicht bis 400, 4,4'-Dihydroxy-diphenylpropan, Di-hydroxy-ethyl-hydrochinon, aber auch Ethanolamin, Diethanolamin, n-Methyldiethanolamin, n-tert.-butyl-di-($\beta$-hydroxy-propyl)-amin, Triethanolamin und 3-Aminopropanol. Als niedermolekulare Polyole kommen auch Gemische von Hydroxyaldehyden und Hydroxyketonen (Formose) bzw. die hieraus durch Reduktion erhaltenen mehrwertigen Alkohole (Formit) in Frage. Als weitere Beispiele für derartige Verbindungen werden in der DE-OS 2 854 384 auf Seiten 20 bis 26 weitere Verbindungen aufgeführt.

Ferner können gegebenenfalls gegenüber Isocyanaten monofunktionelle Verbindungen in Anteilen von 0,01 bis 10 Gew.-%, bezogen auf Polyurethanfeststoff, als sogenannte Kettenabbrecher verwendet werden, z. B. Monoamine wie Butyl oder Dibutylamin, Stearylamin, N-Methyl-stearylamin, Piperidin, Cyclohexylamin oder Monoalkohole wie Butanol, 2-Ethylhexanol, Ethylenglykolmonomethylether.

Katalysatoren der an sich bekannten Art können mitverwendet werden, z. B. tert.-Amine wie Triethylamin, N-Methylmorpholin, Tetramethylethylendiamin, 1,4-Diazabicyclo-(2,2,2)-octan, Bis-(dimethylaminoalkyl)-piperazine, Dimethylbenzylamin, 1,2-Dimethylimidazol, mono- und bicyclische Amidine, Bis-(dialkylaminoalkylether), sowie Amid- (vorzugsweise Formamid)-Gruppen aufweisenden tert.-Amine. Als Katalysatoren kommen auch an sich bekannte Mannichbasen aus sekundären Aminen und Aldehyden oder Ketonen in Frage. Erfindungsgemäß werden besonders organische Metallverbindungen wie organische Zinnverbindungen als Katalysatoren verwendet. Als organische Zinnverbindungen kommen neben schwefelhaltigen Verbindungen wie Di-n-octyl-zinn-mercaptid vorzugsweise Zinn-(II)-Salze von Carbonsäuren wie Zinn-(II)-Acetat, Zinn-(II)-Ethylhexoat und die Zinn-(IV)-Verbindungen, z. B. Dibutylzinndichlorid, Dibutylzinndiacetat,Dibutylzinndilaurat oder Dibutylzinnmaleat in Betracht. Selbstverständlich können alle Katalysatoren als Gemische eingesetzt werden. Weitere Vertreter von verwendbaren Katalysatoren sowie Einzelheiten über die Wirkungsweise sind im Kunststoffhandbuch Band VII, herausgegeben von Vieweg und Höchtlen, Carl-Hanser-Verlag, München 1966, z. B. auf den Seiten 96 bis 102 beschrieben bzw.in der DE-OS 2 854 384 aufgeführt. Als Hilfs-und Zusatzmittel können verwendet werden:

Anorganische oder organische Substanzen als Treibmittel, insbesondere Verbindungen wie Methylenchlorid, Chloroform, Vinylidenchlorid, Monofluortrichlormethan, Chlordichlordifluormethan, ferner Luft, $CO_2$ oder Stickoxid. Weitere Beispiele für Treibmittel sowie Einzelheiten über deren Verwendung sind im Kunststoffhandbuch, herausgegeben von Vieweg und Höchtlen, Carl-Hanser-Verlag München, 1966, z. B. auf den Seiten 108 und 109, 453 bis 455 und 507 bis 510 beschrieben.

Oberflächenaktive Zusatzstoffe, wie Emulgatoren und Schaumstoffinitiatoren werden in üblicher Weise mitverwendet. Als Emulgatoren kommen z. B. Natriumsalze von Rizinusöl-Sulfonaten oder Salze von Fettsäuren mit Aminen wie ölsaures Diethylamin, ferner Alkali- oder Ammoniumsalze von Sulfonsäuren wie Dodecylbenzolsulfonsäure oder Dinaphthylmethan-disulfonsäure in Frage.

Als Schaumstabilisatoren kommen vor allem Polyethersiloxane, speziell wasserlösliche Vertreter, in Frage. Reaktionsverzögerer, z. B. sauer reagierende Stoffe wie Salzsäure, Chloressigsäure oder organische Säurehalogenide, ferner Zellregler der an sich bekannten Art wie Paraffine oder Fettalkohole oder Dimethylpolysiloxane, sowie Pigmente oder Farbstoffe und/oder Flammschutzmittel der an sich bekannten Art, ferner Stabilisatoren gegen Alterungs- und Witterungseinflüsse, Weichmacher, fungistatisch und/oder bakteriostatisch wirkende Substanzen, sowie Füllstoffe können mitverwendet werden. Einzelheiten zu diesen Zusatz- und Hilfsstoffen können der DE-OS 2 854 384 auf Seiten 26 bis 31 und den dort zitierten Literaturstellen entnommen werden.

Die Schaumstoffherstellung kann sowohl als Freischaum als auch als Formschaum in der üblichen Weise erfolgen. Selbstverständlich können die Schaumstoffe auch zur Blockverschäumung oder nach an sich bekannten Doppeltransportbandverfahren oder irgendeiner weiteren Variante der Schaumstofftechnik hergestellt werden.

## Beispiele

### Beispiel 1

a) Herstellung der treibmittelhaltigen Mischung

100 Gew.-Teile eines Polyolgemisches der mittleren Hydroxylzahl 500 und eines Wassergehaltes kleiner als 0,3 Gew.-% und einer Viskosität bei 25° C von 2500 mPas, bestehend aus

1.) 60 Gew.-Teilen eines Polyethers der OH-Zahl 860, der durch Anlagerung von Propylenoxid an Trimethylolpropan erhalten wurde, und
2.) 40 Gew.-Teilen eines Polyethers der OH-Zahl 42, der durch Anlagerung eines Gemisches von Propylenoxid und Ethylenoxid an ein Gemisch aus Trimethylolpropan und Propylenglykol (Mol-Verhältnis = 3 : 1) erhalten wurde;

1,0 Gew.-Teile eines handelsüblichen Polysiloxan-Polyalkylenoxid-Blockcopolymerisats als Schaumstabilisator; 3,0 Gew.-Teile N-Dimethyl-benzylamin und 0,5 Gew.-Teile Tetramethyl-guanidin als Katalysatoren; 3,0 Gew.-Teile Amidamin-Ölsäuresalz, hergestellt aus 1 Mol 3-Dimethylaminopropylamin-1 und 2 Mol Ölsäure, als inneres Trennmittel; 0,2 Gew.-Teile 85%ige wäßrige ortho-Phosphorsäure als Reaktionsverzögerer und 3 Gew.-Teile 3-Hydroxybutanal-oxim (Acetaldol-oxim) als Treibmittel werden zur Komponente A (erfindungsgemäße, reaktivtreibmittelhaltige Mischung); Komponente B besteht aus einem Polyisocyanat, das durch Phosgenierung von Anilin-Formaldehyd-Kondensaten erhalten wurde und eine Viskosität von 130 mPas bei 25°C und einen NCO-Gehalt von 31 Gew.-% aufweist (rohes MDI).

b) Verwendung der treibmittelhaltigen Polyolmischung zur Schaumstoffherstellung

103 Gew.-Teile Komponente A und 146,0 Gew.-Teile Komponente B werden mit einem Zweikomponenten-Dosiermischgerät intensiv vermischt. Dieses schäumfähige Reaktionsgemisch wird sofort in eine offene Papierform (Maße: Länge = 250 mm, Breite = 120 mm, Höhe = 120 mm) eingetragen. Bei der nun einsetzenden Schaumbildung ergeben sich folgende Reaktionszeiten:

| | |
|---|---|
| Startzeit: | 17 Sekunden nach Eintragung des Reaktionsgemisches in die Papierform; |
| Abbindezeit: | 29 Sekunden nach Eintragung des Reaktionsgemisches in die Papierform. |

Die Schaumdichte beträgt 130 kg/m$^3$.

### Beispiel 2

Wie Beispiel 1; als Treibmittel werden zu 100 Gew.-Teilen des Polyolgemisches 3 Gew.-Teile 2-Hydroxy-propanaloxim zugesetzt (Komponente A).

103 Gew.-Teile der Komponente A und 147 Gew.-Teile der Komponente B werden nach dem im Beispiel 1 beschriebenen Verfahren zur Reaktion gebracht und liefern einen Freischaum der Dichte 177 kg/m$^3$.

| | |
|---|---|
| Startzeit: | 19 Sekunden; |
| Abbindezeit: | 31 Sekunden. |

Beispiel 3

Wie in Beispiel 1; als Treibmittel werden zu 100 Gew.-Teilen des Polyolgemsiches 3 Gew.-Teile 3-Hydroxy-2-methyl-butanal-oxim zugesetzt (Komponente A). 103 Gew.-Teile der Komponente A und 146 Gew.-Teile der Komponente B werden nach dem im Beispiel 1 beschriebenen Verfahren zur Reaktion gebracht und liefern einen Freischaum der Dichte 107 kg/m³.

| | |
|---|---|
| Startzeit: | 17 Sekunden; |
| Abbindezeit: | 32 Sekunden. |

Beispiel 4

Wie Beispiel 3; als Treibmittel wird das zum 3-Hydroxy-2-methyl-butanal-oxim (sekundäre OH-Gruppe) isomere 3-Hydroxy-2,2-dimethyl-propanal-oxim (primäre OH-Gruppe) eingesetzt.

| | |
|---|---|
| Freischaumdichte: | 285 kg/m³; |
| Startzeit: | 19 Sekunden; |
| Abbindezeit: | 29 Sekunden. |

Beispiel 5

Wie Beispiel 1; als Treibmittel werden zu 100 Gew.-Teilen des Polyolgemisches 4 Gew.-Teile 4-Aminobenzaldoxim zugesetzt (Komponente A). 104 Gew.-Teile der Komponente A und 146 Gew.-Teile der Komponente B werden nach dem in Beispiel 1 beschriebenen Verfahren zur Reaktion gebracht und liefern einen Freischaum der Dichte 218 kg/m³.

| | |
|---|---|
| Startzeit: | 19 Sekunden; |
| Abbindezeit: | 31 Sekunden. |

Beispiel 6

80 Gew.-Teile eines difunktionellen Polyethers der Hydroxylzahl 28, der durch Anlagerung von Propylenoxid und Ethylenoxid an Propylenglykol erhalten wurde, 12 Gew.-Teile eines trifunktionellen Polyethers der Hydroxylzahl 35 und eines mittleren Molekulargewichtes von 4800, der durch Anlagerung von Propylenoxid und Ethylenoxid an Trimethylolpropan erhalten wurde, 20 Gew.-Teile Ethylenglykol, 2 Gew.-Teile Trimethylolpropan, 0,015 Gew.-Teile Zinndibutyldilaurat, 0,3 Gew.-Teile Triethylendiamin und 2,6 Gew.-Teile 3-Hydroxybutanol-oxim als Treibmittel werden zur Komponente A vermischt.

Komponente B besteht aus einem Semiprepolymer aus Bis-(4-isocyanatophenyl)-methan und Dipropylenglykol mit einem NCO-Gehalt von 22,8 Gew.-%. 117 Gew.-Teile Komponente A und 148 Gew.-Teile Komponente B werden mit einem Zweikomponentendosiermischgerät intensiv vermischt. Dieses schaumfähige Reaktionsgemisch wird sofort in eine offene Papierform (Maße s. Beispiel 1) eingetragen. Bei der einsetzenden Schaumbildung ergibt sich eine Startzeit von 18 Sekunden.

Variante

Die gleiche Menge der Komponenten A und B wird nach dem Vermischen in ein auf ca. 80° C temperiertes, plattenförmiges, vertikal stehendes Werkzeug über einen an der nächsten Stelle liegenden Ausguß eingetragen. Das plattenförmige Formteil (Höhe = 200 mm, Breite = 200 mm, Länge = 10 mm) kann nach 3 Minuten Formstandzeit entfernt werden. Das Raumgewicht beträgt 630 kg/m³. Die Platte besitzt eine Oberflächenhärte von 54 Shore D.

**Patentansprüche**

1. Aldoxime als Treibmittel aufweisende Mischungen, enthaltend

A) unterhalb von 45° C flüssige Polyole oder Polyol-Gemische mit einem mittleren Molekulargewicht von 400 bis 10 000 und darin gelöst

B) 0,1 bis 20 Gew.-%, vorzugsweise 0,2 bis 8 Gew.-%, eines einbaufähigen Aldoxim-Reaktivtreibmittels der Formel

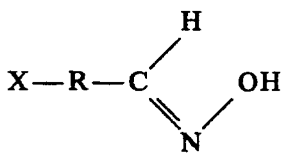 (I)

wobei

X —OH, —COOH, $-NH_2$ (Amino nur an aromatische Reste gebunden), —NHR', worin R' eine Alkylgruppe mit 1 bis 8 C-Atomen bedeutet (nur an aromatische Reste gebunden); vorzugsweise die OH-Gruppe, besonders als sekundäre OH-Gruppe, und

R einen aliphatischen, gegebenenfalls verzweigten Rest mit 1 bis 9 C-Atomen, vorzugsweise 1 bis 4 C-Atomen, einen cycloaliphatischen Rest, gegebenenfalls ein —O-Atom im Ring enthaltend, einen aromatischen Rest oder einen araliphatischen Rest, bei dem der aliphatische Rest durch ein Sauerstoffatom an den aromatischen Kern gebunden ist, bedeutet.

2. Gemisch nach Anspruch 1, dadurch gekennzeichnet, daß das Polyol oder Polyolgemisch bei Raumtemperatur flüssig ist.

3. Gemisch nach Ansprüchen 1 und 2, dadurch gekennzeichnet, daß das Polyol oder Polyolgemisch ein mittleres Molekulargewicht von 600 bis 4000 aufweist.

4. Gemisch nach Ansprüchen 1 bis 3, dadurch gekennzeichnet, daß X eine Hydroxylgruppe und R einen aliphatischen oder cycloaliphatischen Rest mit 1 bis 9 C-Atomen bedeutet.

5. Gemisch nach Ansprüchen 1 bis 4, dadurch gekennzeichnet, daß X eine sekundäre Hydroxylgruppe und R einen aliphatischen Rest mit 1 bis 4 C-Atomen bedeutet.

6. Gemisch nach Ansprüchen 1 bis 5, dadurch gekennzeichnet, daß als einbaufähiges Aldoxim-Reaktiv-Treibmittel

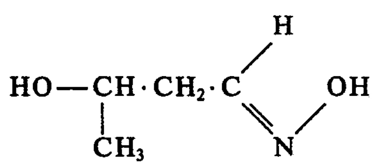

verwendet wird.

7. Verwendung der Mischungen aus (A) unterhalb von 40°C flüssigen Polyolen oder Polyol-Gemischen mit einem mittleren Molekulargewicht von 400 bis 10 000 und darin gelöst (B) 0,1 bis 20 Gew.-%, vorzugsweise 0,2 bis 8 Gew.-%, eines einbaufähigen Aldoxim-Reaktiv-Treibmittels der Formel

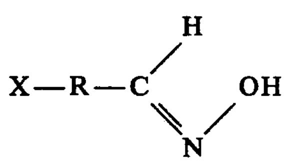 (I)

nach Ansprüchen 1 bis 6 zur Umsetzung mit Polyisocyanaten, gegebenenfalls in Gegenwart weiterer Verbindungen vom Molekulargewicht 62 bis 10 000, vorzugsweise 62 bis 400, mit gegenüber NCO-Gruppen reaktiven H-Atomen und gegebenenfalls weiteren Hilfs- und Zusatzstoffen, zum Aufschäumen der Reaktionsgemische durch $CO_2$ aus den einbaufähigen Aldoxim-Reaktiv-Treibmitteln unter Bildung von Polyurethanschaumstoffen.

8. Verwendung der Gemische nach Anspruch 7, dadurch gekennzeichnet, daß bei Raumtemperatur flüssige Polyole oder Polyol-Mischungen auf Polyetherbasis mit mittleren Molekulargewichten von 600 bis 4000 und 0,2 bis 8 Gew.-% an einbaufähigen Aldoxim-Reaktiv-Treibmitteln

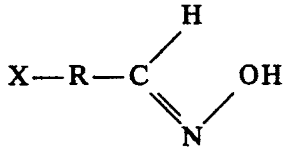

bei denen X eine sekundäre Hydroxylgruppe und R ein aliphatischer Rest mit bis zu 4 C-Atomen ist, zur Bildung der Polyurethanschaumstoffe eingesetzt werden.

**Claims**

1. Mixtures incorporating aldoximes as blowing agents and containing

A) polyols or polyol mixtures liquid at temperatures below 45° C and having an average molecular weight of from 400 to 10,000 and, dissolved therein,
B) from 0.1 to 20% by weight and preferably from 0.2 to 8% by weight of an incorporable aldoxime reactive blowing agent corresponding to the following formula

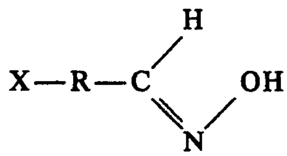

(I)

in which

X represents $-OH$, $-COOH$, $-NH_2$ (amino bound to aromatic radicals only), $-NHR'$, where R' is a $C_1-C_8$-alkyl group (bound to aromatic radicals only); preferably the OH-group, particularly in the form of a secondary OH-group, and
R represents an aliphatic, optionally branched radical containing from 1 to 9 C-atoms and preferably from 1 to 4 C-atoms, a cycloaliphatic radical, optionally containing an $-O$-atom in the ring, an aromatic radical or an araliphatic radical in which the aliphatic radical is attached to the aromatic nucleus by an oxygen atom.

2. A mixture as claimed in Claim 1, characterized in that the polyol or polyol mixture is liquid at room temperature.
3. A mixture as claimed in Claims 1 and 2, characterized in that the polyol or polyol mixture has an average molecular weight of from 600 to 4000.
4. A mixture as claimed in Claims 1 to 3, characterized in that X is a hydroxyl group and R is an aliphatic or cycloaliphatic radical containing from 1 to 9 C-atoms.
5. A mixture as claimed in Claims 1 to 4, characterized in that X is a secondary hydroxyl group and R is an aliphatic radical containing from 1 to 4 C-atoms.
6. A mixture as claimed in Claims 1 to 5, characterized in that

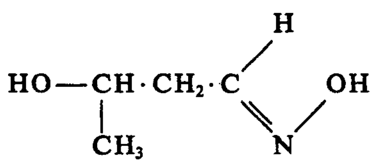

is used as the incorporable aldoxime reactive blowing agent.
7. The use of the mixtures claimed in Claims 1 to 6 of (A) polyols or polyol mixtures liquid at temperatures below 40° C and having an average molecular weight of from 400 to 10,000 and, dissolved therein, (B) from 0.1 to 20% by weight and preferably from 0.2 to 8% by weight of an incorporable aldoxime reactive blowing agent corresponding to the following formula

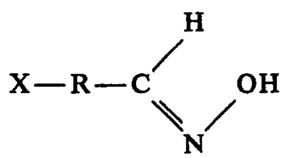

(I)

for reaction with polyisocyanates, optionally in the presence of other compounds having a molecular weight in the range from 62 to 10,000 and preferably in the range from 62 to 400 and containing NCO-reactive H-atoms and, optionally, other auxiliaries and additives for foaming the reaction mixtures by $CO_2$ from the incorporable aldoxime reactive blowing agents to form polyurethane foams.
8. The use of the mixtures as claimed in Claim 7, characterized in that polyols or polyol mixtures liquid at room temperature, based on polyethers and having average molecular weights of from 600 to 4000 and from 0.2 to 8% by weight of incorporable aldoxime reactive blowing agents

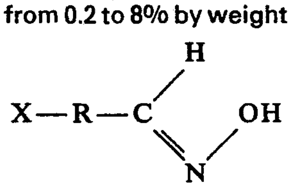

in which X represents a secondary hydroxyl group and R is an aliphatic radical containing up to 4 C-atoms, are used for forming the polyurethane foams.

**Revendications**

1. Mélanges comportant des aldoximes comme agents moussants et contenant:

A) des polyols ou des mélanges de polyols liquides en dessous de 45° C et ayant un poids moléculaire moyen de 400 à 10.000;

et, en solution dans ces derniers:

B) 0,1 à 20% en poids, de préférence, 0,2 à 8% en poids d'un agent moussant réactif d'aldoxime incorporable de formule:

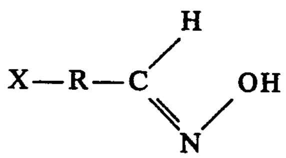

(I)

où

X représente —OH, —COOH, $-NH_2$ (groupe amino lié uniquement à des radicaux aromatiques), —NHR' où R' représente un groupe alkyle contenant 1 à 8 atomes de carbone (lié uniquement à des radicaux aromatiques), de préférence, le groupe —OH, en particulier, sous forme d'un groupe —OH secondaire et

R représente un radical aliphatique éventuellement ramifié contenant 1 à 9 atomes de carbone, de préférence, 1 à 4 atomes de carbone, un radical cycloaliphatique contenant éventuellement un atome d'O dans le noyau, un radical aromatique ou un radical araliphatique dans lequel le radical aliphatique est lié au noyau aromatique par un atome d'oxygène.

2. Mélange suivant la revendication 1, caractérisé en ce que le polyol ou le mélange de polyols est liquide à la température ambiante.

3. Mélange suivant les revendications 1 et 2, caractérisé en ce que le polyol ou le mélange de polyols a un poids moléculaire moyen de 600 à 4.000.

4. Mélange suivant les revendications 1 à 3, caractérisé en ce que X représente un groupe hydroxy et R représente un radical aliphatique ou cycloaliphatique contenant 1 à 9 atomes de carbone.

5. Mélange suivant les revendications 1 à 4, caractérisé en ce que X représente un groupe hydroxy secondaire et R représente un radical aliphatique contenant 1 à 4 atomes de carbone.

6. Mélange suivant les revendications 1 à 5, caractérisé en ce que, comme agent moussant réactif d'aldoxime incorporable, on utilise celui répondant à la formule:

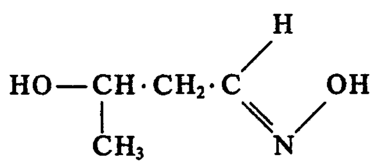

7. Utilisation des mélanges comprenant (A) des polyols ou des mélanges de polyols liquides en dessous de 40° C et ayant un poids moléculaire moyen de 400 à 10.000 et, en solution dans ces derniers, (B) 0,1 à 20% en poids, de préférence, 0,2 à 8% en poids d'un agent moussant réactif d'aldoxime incorporable de formule:

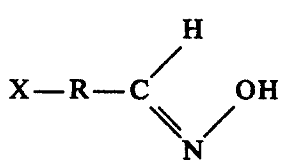

(I)

suivant les revendications 1 à 6, pour la réaction avec des polyisocyanates, éventuellement en présence d'autres composés d'un poids moléculaire de 62 à 10.000, de préférence, de 62 à 400, comportant des atomes de H réactifs vis-à-vis des groupes NCO et éventuellement d'autres adjuvants et additifs, pour la transformation en mousse des mélanges réactifs par $CO_2$ provenant des agents moussants réactifs d'aldoximes incorporables avec formation de mousses de polyuréthanes.

8. Utilisation des mélanges suivant la revendication 7, caractérisé en ce que, pour la formation des mousses de polyuréthanes, on emploie des polyols ou des mélanges de polyols, liquides à la température ambiante, à base de polyéthers et ayant des poids moléculaires moyens de 600 à 4.000, ainsi que 0,2 à 8% en poids d'agents moussants réactifs d'aldoximes incorporables

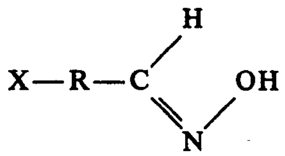

où X représente un groupe hydroxy secondaire et R représente un radical aliphatique contenant jusqu'à 4 atomes de carbone.